# FASCICULE DE BREVET EUROPEEN

(11) **EP 2 839 202 B1**
(45) Date de publication et mention de la délivrance du brevet: **01.08.2018**
(21) Numéro de dépôt: 13719908.9
(22) Date de dépôt: 22.03.2013
(51) Int. Cl.: F17C 13/06, F17C 13/00

(54) **CHAPEAU DE PROTECTION POUR ROBINET DE BOUTEILLE DE FLUIDE SOUS PRESSION ET SON PROCÉDÉ DE FABRICATION**
SCHUTZKAPPE FÜR EIN DRUCKFLÜSSIGKEITSZYLINDERVENTIL UND HERSTELLUNGSVERFAHREN DAFÜR
PROTECTIVE CAP FOR A PRESSURISED FLUID CYLINDER VALVE AND PRODUCTION METHOD THEREOF

(30) Priorité: 19.04.2012 FR 1253604
(43) Date de publication de la demande: 25.02.2015
(73) Titulaire: L'Air Liquide Société Anonyme pour l'Etude et l'Exploitation des Procédés Georges Claude, 75007 Paris (FR)
(72) Inventeur: LIGONESCHE, Renaud, F-95220 Herblay (FR); TRINDADE, François, F-23300 Saint Priest La Feuille (FR); LEBEGUE, William, F-23800 Naillat (FR)
(74) Mandataire: De Cuenca, Emmanuel Jaime
(86) Numéro de dépôt international: PCT/FR2013/050620
(87) Numéro de publication internationale: WO 2013/156698

(56) Documents cités:
- EP-A2- 0 189 046
- WO-A1-2012/030882
- DE-U1-202009 017 665

## Description

La présente invention concerne un chapeau de protection pour robinet de bouteille de fluide sous pression et son procédé de fabrication.

L'invention concerne plus particulièrement un chapeau de protection pour robinet de bouteille de fluide sous pression comprenant un arceau définissant un volume abrité de protection, l'extrémité inférieure de l'arceau étant fixée à une base de forme générale annulaire destinée à être montée autour du col d'une bouteille de fluide sous pression.

Les bouteilles de fluide sous pression et les équipements qui les accompagnent sont soumis à des réglementations et des normes de sécurité.

Les chapeaux de protection des robinets de bouteilles de gaz sont par exemple soumis à la norme suivante: le test normatif ISO 11117 et particulièrement la résistance aux chocs (à 20°C et -20°C). Ces chapeaux doivent également satisfaire à des exigences de tenue au feu et de cycles de vie prolongés.

Pour satisfaire à ces contraintes certains chapeaux de protection sont constitués de métal. Le document DE10146261 décrit ainsi un chapeau réalisé en métal moulé et dont les différentes parties sont soudées. Ce type d'architecture et sa fabrication conduit cependant à un chapeau relativement lourd, onéreux à fabriquer si les normes de tenue mécaniques doivent être respectées.

Le document GB1529293 décrit quant à lui un chapeau de protection constitué d'une une seule pièce emboutie. Ce chapeau présente cependant une géométrie qui n'est pas optimale pour la protection de tous les robinets. De plus, ce mode réalisation conduit à chapeau dont la tenue mécanique aux chutes n'est pas satisfaisante.

Selon d'autres solutions connues le chapeau est réalisé en plastique, éventuellement avec un insert métallique (cf. EP1041339). Le document DE20 2009 017665 U1 divulgue également un chapeau de protection. D'une manière générale, pour assurer toutes les fonctions requises et satisfaire aux contraintes techniques, les conceptions de chapeau connus nécessitent une quantité de matière relativement importante.

Un but de la présente invention est de pallier tout ou partie des inconvénients de l'art antérieur relevés ci-dessus.

Un but de l'invention peut notamment être de proposer un chapeau et son procédé de fabrication qui permettent de répondre aux contraintes de sécurité sans pénaliser notamment la masse du chapeau, son coût, la possibilité de donner au chapeau une forme qui s'adapte à différentes géométries de robinet tout en présentant un aspect attractif.

A cette fin, le chapeau selon l'invention, par ailleurs conforme à la définition générique qu'en donne le préambule ci-dessus, est essentiellement caractérisé en ce que l'arceau comprend une feuille métallique mis en forme par emboutissage.

Par ailleurs, des modes de réalisation de l'invention peuvent comporter l'une ou plusieurs des caractéristiques suivantes :
- l'extrémité supérieure de l'arceau comporte une protubérance sur laquelle est fixée un pommeau de préhension du chapeau,
- le pommeau est fixé par soudage et/ou sertissage sur l'extrémité supérieure de l'arceau,
- le pommeau a la forme générale d'un capuchon creux qui, en position montée sur l'arceau, accueille en son sein au moins une partie de la protubérance,
- la protubérance est formée par emboutissage de l'arceau,
- le pommeau est fixé par soudage sur l'extrémité libre de la protubérance,
- le pommeau est creux, l'extrémité libre de la protubérance reposant contre le fond du pommeau tandis qu'une extrémité inférieure du pommeau repose sur l'extrémité supérieure de l'arceau et/ou sur une autre portion de la protubérance,
- l'extrémité supérieure libre du pommeau est convexe vers l'extérieur du chapeau,
- la base comprend une pièce métallique distincte de l'arceau et ayant la forme générale d'un anneau ouvert dont deux extrémités en vis-à-vis sont munies de passages respectifs pour un axe de serrage dudit anneau, l'extrémité inférieure de l'arceau étant fixée à la base par soudage et/ou par sertissage,
- l'extrémité inférieure de l'arceau comporte deux demi-anneaux formant un collier circulaire qui enserre la base sur une fraction de la circonférence de la base comprise entre 20 à 100% et de préférence entre 60 et 100%,
- la base est composée d'une pièce métallique mise en forme par emboutissage,
- l'arceau comporte au moins une nervure qui s'étend selon la direction de cintrage de l'arceau ladite au moins une nervure étant formée par une pliure d'emboutissage,
- la protubérance est ouverte à son extrémité supérieure,
- la protubérance a la forme générale d'un tronc de cône dont le diamètre diminue en direction de son extrémité libre,
- la protubérance a la forme générale d'un tronc de cône qui converge de façon discontinue en direction de son extrémité libre, c'est-à-dire que la protubérance définit une portion convexe et/ou concave sur sa surface extérieure,
- la base comporte une portion de montage de forme générale tubulaire destinée à être montée autour d'un col de bouteille, l'extrémité supérieure de la portion de montage étant cintrée perpendiculairement à l'axe de la portion tubulaire pour former un rebord qui est fixé à l'extrémité inférieure de l'arceau,
- l'arceau est au moins partiellement convexe vers l'extérieur du volume de protection,
- les passages pour un axe de serrage dudit anneau formés aux extrémités de l'anneau anneau ouvert formé par la base sont situés sur des plaquettes perforées respectives solidaires de la base ou rapportées sur la base,
- le pommeau est composé d'une pièce métallique mis en forme par emboutissage,
- au moins l'un parmi : l'arceau, la base, le pommeau est constitué de l'un au moins des matériaux suivants : un matériau métallique, un acier ayant de préférence des caractéristiques supérieures ou égales à celles d'un acier de construction, par exemple un acier de type S355MC selon la norme NF EN 10149.2 avec une limite élastique de Re = 355 (MPa) et une résistance à la rupture de Rm =430 à 550 (MPa),
- au moins l'un parmi : l'arceau, la base, le pommeau a une épaisseur comprise entre 0,5 et 10mm et de préférence entre 1 et 4mm ou tout autre épaisseur selon appropriée selon le poids de charge, les sollicitations, les formes de l'embouti,
- la circonférence de la base présente au moins une excroissance, ou respectivement un renfoncement, qui est reçu, respectivement qui reçoit, un renfoncement ou une excroissance complémentaire formée au niveau de l'extrémité inférieure de l'arceau.

L'invention concerne également une bouteille de fluide sous pression munie d'un robinet et d'un chapeau de protection du robinet conforme à l'une quelconque des caractéristiques ci-dessus ou ci-après.

L'invention concerne également un procédé de fabrication d'un chapeau de protection pour robinet de bouteille de fluide sous pression conforme à l'une quelconque des caractéristiques précédentes ou ci-après comprenant :
- une étape de réalisation d'un arceau par emboutissage d'une feuille métallique, et
- une étape de soudage de l'extrémité inférieure de l'arceau sur une base de forme générale annulaire.

Selon d'autres particularités possibles :
- lors de l'étape de réalisation d'un arceau par emboutissage d'une feuille métallique, une protubérance est réalisée sur l'extrémité supérieure de l'arceau, le procédé comprenant en outre une étape de soudage d'un pommeau sur ladite protubérance,
- l'étape de soudage de l'extrémité inférieure de l'arceau sur une base de forme générale annulaire est précédée d'une étape de réalisation de la base par emboutissage d'une feuille métallique,
- l'extrémité inférieure de l'arceau forme un collier circulaire, lors de l'étape de soudage de l'extrémité inférieure de l'arceau sur une base, l'extrémité inférieure de l'arceau enserre 60 à 100% de la circonférence de la base,
- préalablement à l'étape de soudage de l'extrémité inférieure de l'arceau sur une base de forme générale annulaire, la base est introduite entre les branches de l'arceau via le volume abrité, de haut en bas par référence aux extrémités supérieure et inférieure de l'arceau.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective d'un exemple de réalisation possible d'un chapeau de protection selon l'invention,
- la figure 2 représente une vue de derrière du chapeau de la figure 1,
- la figure 3 représente une vue en perspective, partielle et de dessous du chapeau de la figure 1,
- la figure 4 représente une vue en coupe selon un plan vertical du chapeau de la figure 1,
- la figure 5 représente une vue en coupe selon un plan vertical du chapeau de la figure 1 monté sur une bouteille illustrant schématiquement un choc sur le sol,
- la figure 6 représente une vue schématique et partielle illustrant un exemple d'étapes de fabrication possibles du chapeau de la figure 1.

Le chapeau de protection pour robinet de bouteille de fluide sous pression illustré aux figures comprend un arceau 1 définissant un volume abrité de protection et dont l'extrémité inférieure est fixée à une base 2 de forme générale annulaire destinée à être montée autour du col d'une bouteille de fluide sous pression. On qualifiera d'extrémités « inférieure » et « supérieure » les extrémités du chapeau respectivement située au niveau de la base 2 et à l'opposé de la base 2.

Par exemple, l'arceau 1 à la forme générale d'un U inversé dont les deux extrémités inférieures des branches du U sont fixées à la base 2. Comme représenté, les deux extrémités inférieures des branches du U fixées à la base 2 ne sont pas parallèles mais convergent légèrement.

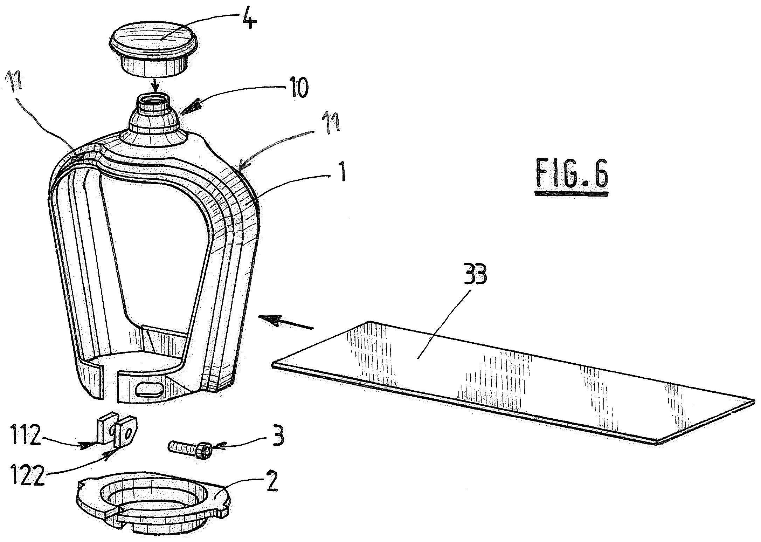

Selon une caractéristique avantageuse, l'arceau 1 est composé (et de préférence constitué) d'une feuille 33 métallique mis en forme par emboutissage (cf. figure 6).

Comme cela sera décrit plus en détail ci-après, cette caractéristique permet de conférer une bonne résistance mécanique au chapeau tout en utilisant une épaisseur de matériau relativement faible. L'arceau 1 est de préférence constitué de l'un au moins des matériaux parmi : un acier, un acier inox, un acier avec revêtement de type cataphorèse, un aluminium avec traitement de type anodisation. Tous les types de matériaux métalliques appropriés sont envisageables avec, le cas échéant, le ou les traitements adaptés par exemple pour la corrosion, pour l'aspect de finition,...). Ces matériaux confèrent au chapeau une bonne tenue au feu ainsi qu'une bonne résistance à la corrosion.

Cette structure permet également, via des nervures et/ou plis et/ou bossages, d'augmenter la tenue mécanique ou d'améliorer la répartition des efforts subis par le chapeau en cas de choc par rapport aux solutions connues.

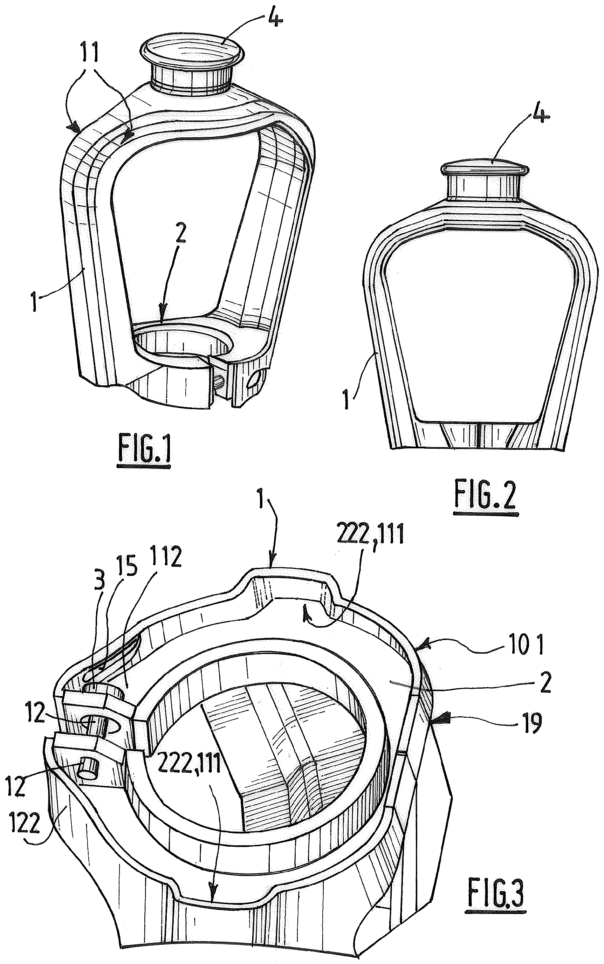

Comme visible à la figure 1, l'arceau 1 peut comporter au moins (et par exemple deux nervures 11) qui s'étend selon la direction de cintrage de l'arceau. La ou les nervure 11 peuvent être formée par une pliure d'emboutissage de la feuille métallique. Par exemple deux nervures 11 forment un épaulement qui s'étend sur l'arceau sur tout ou partie de l'arceau 1 et selon la direction du cintrage de l'arceau 1.

L'arceau 1 peut être au moins partiellement convexe vers l'extérieur du volume de protection. L'épaisseur de l'arceau 1 est par exemple comprise entre 0,5mm et10mm et de préférence entre 1mm et 4mm. Bien entendu cette épaisseur peut être adaptée en fonction de l'application, du poids de charge, des sollicitations attendues, des formes embouties du chapeau.

La base 2 comprend une pièce métallique distincte de l'arceau 1 qui a de préférence la forme générale d'un anneau ouvert formant ainsi une bride de fixation. Les deux extrémités en vis-à-vis de l'anneau sont par exemple munies de passages respectifs 12, 22 pour un axe 3 de serrage dudit anneau. Les passages 12, 22 (le cas échéant taraudés) pour l'axe 3 de serrage (le cas échéant fileté) peuvent être des plaquettes perforées 112, 122 respectives solidaires de la base 2 ou rapportées sur la base 2.

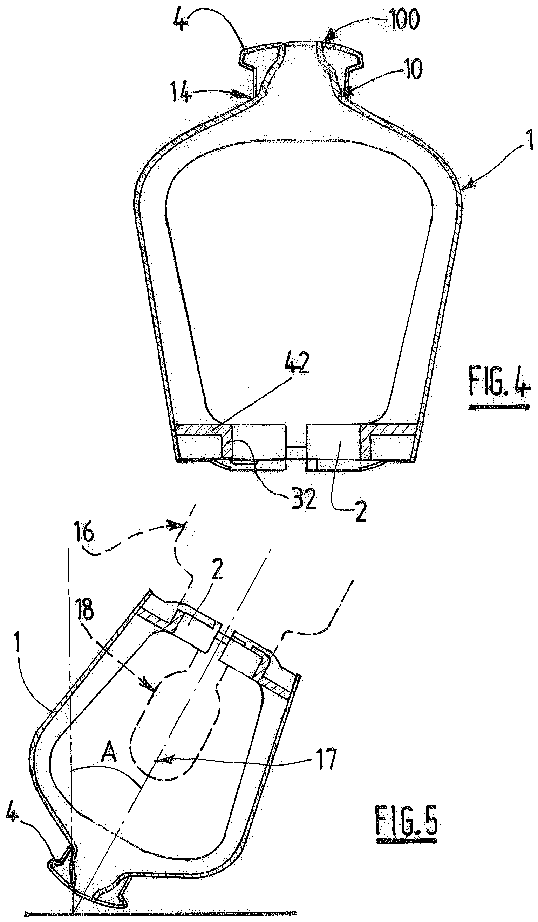

Comme visible aux figures 3 et 4, la base 2 peut comporter une portion 32 de montage de forme générale tubulaire 2 destinée à être montée autour d'un col de bouteille. L'extrémité supérieure de la portion 32 de montage peut être cintrée perpendiculairement à l'axe de la portion tubulaire vers l'extérieur de la partie tubulaire pour former un rebord 42 qui est fixé à l'extrémité inférieure de l'arceau 1.

Par exemple, l'extrémité inférieure de l'arceau 1 est fixée à la base 2 par soudage et/ou par sertissage ou toute autre technique appropriée.

Par exemple, l'extrémité inférieure de l'arceau 1 comporte deux demi-anneaux formant un collier 101 circulaire qui enserre la base 2 sur une fraction de la circonférence de la base 2 comprise entre 60 à 100%. C'est-à-dire que chaque extrémité inférieure des deux branches de l'arceau 1 est solidaire (de préférence venu de matière) avec une un demi-anneau qui est fixé sur une partie de la périphérie de la base 2. Comme visible à la figure 3, la circonférence de la base 2 peut présenter au moins une excroissance 222 (deux excroissances 222 dans l'exemple de la figure 3) qui est reçue un renfoncement 111 respectif formé au niveau de l'extrémité inférieure de l'arceau 1. Par exemple, les renfoncements 11 sont formés par une extrémité de la ou des nervures 11 de l'arceau 1.

Cette configuration assure un blocage mécanique en rotation de l'arceau 1 par rapport à la base 2 qui de plus améliore la transmission et la dissipation d'efforts au sein du chapeau en cas de choc. Ces formes participent de plus à l'indexage de l'arceau sur la base 2 lors de la phase de soudage. En variante ou en combinaison avec ce qui précède, la base 2 pourrait comporter un ou des renfoncements qui coopèrent respectivement avec des excroissances respectives formées de préférence par des nervures ou bossage de l'arceau 1.

De même, de préférence, une partie de la circonférence de la base 2 et donc une partie de l'extrémité inférieure de l'arceau 1 présente un méplat 19. Le méplat 19 est par exemple situé à l'opposé de la partie munie d'un axe 3 de serrage. Le méplat 19 est par exemple prévu pour faciliter l'accès au volume de protection. Le méplat 19 forme ainsi un rétrécissement localisé qui ménage un passe pour des raccordements fluidiques par exemple.

Comme visible à la figure 4, l'arceau 1 est par exemple soudé sur la bordure du rebord 42 formé par la base 2 (de préférence selon plusieurs points de soudure répartis sur le tour de la base 2).

Comme visible aux figures 2 et 3 notamment, la base 2 peut ne pas faire saille au-delà de l'extrémité inférieure de l'arceau 1. Ainsi, les passages 12, 22 et l'axe de serrage sont protégés par l'arceau 1. Une lumière 15 peut être prévue au travers de l'extrémité inférieure de l'arceau 1 pour accéder à l'axe 3 de serrage.

La base 2 peut également être composée d'une pièce métallique mis en forme par emboutissage. En variante, la base 2 pourrait être obtenue par moulage d'un matériau métallique. De préférence, la base est constituée du même matériau que l'arceau 1.

Du fait que les extrémités inférieures de l'arceau 1 ne sont pas parallèles (mais convergent), la base 2 peut avoir une dimension transverse supérieure à l'espace entre les extrémités terminales inférieures de l'arceau 1. De ce fait, la base 2 est introduite entre les deux branches de l'arceau 1 de haut en bas via le volume de protection de l'arceau 1 (cf. figures 4 et 6). C'est-à-dire que la base 2 peut être serrée dans l'arceau 1.

L'extrémité supérieure de l'arceau 1 comporte de préférence un pommeau 4 de manutention du chapeau (et donc de la bouteille munie du chapeau).

Selon une particularité particulièrement avantageuse possible, l'extrémité supérieure de l'arceau 1 comporte une protubérance 10 sur laquelle est fixé le pommeau 4.

De préférence le pommeau 4 est également métallique et est fixé par soudage et/ou sertissage sur l'extrémité supérieure de l'arceau 1.

Comme visible à la figure 4, la protubérance 10 peut être formée par emboutissage lors de la fabrication de l'arceau 1. Par exemple, la protubérance 10 a la forme générale d'un tronc de cône dont le diamètre diminue (pas forcément continûment) en direction de son extrémité libre 100.

La protubérance 10 peut être ouverte à son extrémité supérieure 100. De plus, la protubérance 10 peut définir au moins une portion convexe et/ou concave sur sa surface extérieure.

Comme visible à la figure 4, le pommeau 4 peut avoir une forme d'un capuchon creux qui, en position montée sur l'arceau 1, accueille en son sein au moins une partie de la protubérance 10.

Par exemple, l'extrémité libre de la protubérance 10 reposant contre le fond du pommeau 4 et forme une zone de soudage entre ces deux pièces. L'extrémité inférieure 14 du pommeau 4 peut reposer (ou être emmanchée/soudée...) sur l'extrémité supérieure de l'arceau 1 et/ou sur une autre portion de la protubérance 10.

De préférence le pommeau 4 offre une prise à la saisie manuelle, par exemple un rebord sur la périphérie.

De préférence également, l'extrémité supérieure libre du pommeau 4 est convexe vers l'extérieur du chapeau. Cette configuration, en plus d'améliorer l'ergonomie de la prise manuelle, augmente la tenue au choc du chapeau comme décrit ci-dessous.

La figure 5 illustre de façon schématique et partielle un exemple d'impact du chapeau sur le sol. Le chapeau est monté sur une bouteille 16 et vient frapper le sol avec un angle A de trente degrés par rapport à l'axe 17 vertical de la bouteille et du chapeau. Cette configuration est obtenue par exemple en suspendant la bouteille à l'envers (par exemple à 1,20 mètre du sol). Selon ce test de chute (norme ISO 11117), le pommeau 4 vient frapper en premier le plan d'impact.

Sous l'effet du choc le pommeau 4, de part sa structure et son montage sur l'arceau 1, peut se déformer et absorber une première partie de l'énergie générée par le choc. De plus, simultanément ou dans un second temps, le profil de la protubérance 10 sur laquelle est montée le pommeau 4 réparti l'effort au sein de l'arceau 1 et jusqu'au niveau de la base 2. Ceci limite les déformations trop localisées pouvant entraîner une déformation affectant le robinet 18 situé dans le volume de protection.

La forme convexe du pommeau 4 assure également lors de l'impact un contact générant un glissement du chapeau suivi d'un moment de rotation de l'ensemble. Des simulations et tests indiquent que ce moment de rotation limite considérablement l'impact sur le chapeau.

On conçoit donc aisément que, tout en étant de structure simple et peu coûteuse, le chapeau selon l'invention est particulièrement efficace en terme de protection et de tenue au choc.

## Revendications

1. Chapeau de protection pour robinet de bouteille de fluide sous pression comprenant un arceau (1) définissant un volume abrité de protection, l'extrémité inférieure de l'arceau (1) étant fixée à une base (2) de forme générale annulaire destinée à être montée autour du col d'une bouteille de fluide sous pression, l'arceau (1) comprenant une feuille métallique mis en forme par emboutissage, **caractérisé en ce que** l'extrémité supérieure de l'arceau (1) comporte une protubérance (10) sur laquelle est fixée un pommeau (4) de préhension du chapeau, et **en ce que** le pommeau (4) a la forme générale d'un capuchon creux qui, en position montée sur l'arceau (1), accueille en son sein au moins une partie de la protubérance (10).

2. Chapeau selon la revendication 2, **caractérisé en ce que** le pommeau (4) est fixé par soudage et/ou sertissage sur l'extrémité supérieure de l'arceau (1).

3. Chapeau selon l'une quelconque des revendications 1 ou 2, **caractérisé en ce que** la protubérance (10) est formée par emboutissage de l'arceau (1).

4. Chapeau selon l'une quelconque des revendications 1 à 3, **caractérisé en ce que** le pommeau (4) est fixé par soudage sur l'extrémité (100) libre de la protubérance (10).

5. Chapeau selon l'une quelconque des revendications 1 à 4, **caractérisé en ce que** le pommeau (4) est creux, l'extrémité libre de la protubérance (10) reposant contre le fond du pommeau (4) tandis qu'une extrémité inférieure (14) du pommeau (4) repose sur l'extrémité supérieure de l'arceau (1) et/ou sur une autre portion de la protubérance (10).

6. Chapeau selon l'une quelconque des revendications 1 à 5, **caractérisé en ce que** l'extrémité supérieure libre du pommeau (4) est convexe vers l'extérieur du chapeau.

7. Chapeau selon l'une quelconque des revendications 1 à 6, **caractérisé en ce que** la base (2) comprend une pièce métallique distincte de l'arceau (1) et ayant la forme générale d'un anneau ouvert dont deux extrémités en vis-à-vis sont munies de passages respectifs (12, 22) pour un axe (3) de serrage dudit anneau, l'extrémité inférieure de l'arceau (1) étant fixée à la base (2) par soudage et/ou par sertissage.

8. Chapeau selon la revendication 7, **caractérisé en ce que** l'extrémité inférieure de l'arceau (1) comporte deux demi-anneaux formant un collier (101) circulaire qui enserre la base (2) sur une fraction de la circonférence de la base (2) comprise entre 20 à 100% et de préférence entre 60 et 100%.

9. Chapeau selon l'une quelconque des revendications 1 à 8, **caractérisé en ce que** la base (2) est composée d'une pièce métallique mise en forme par emboutissage.

10. Chapeau selon l'une quelconque des revendications 1 ou 9, **caractérisé en ce que** l'arceau (1) comporte au moins une nervure (11) qui s'étend selon la direction de cintrage de l'arceau (1) ladite au moins une nervure (11) étant formée par une pliure d'emboutissage.

11. Chapeau selon l'une des quelconques des revendications 1 à 10, **caractérisé en ce que** l'arceau (1) est au moins partiellement convexe vers l'extérieur du volume de protection.

12. Chapeau selon l'une quelconque des revendications 1 à 11, **caractérisé en ce que** la protubérance (10) a la forme générale d'un tronc de cône dont le diamètre diminue en direction de son extrémité libre.

13. Bouteille de fluide sous pression munie d'un robinet (18) et d'un chapeau de protection du robinet (18), **caractérisé en ce que** le chapeau est conforme à l'une quelconque des revendications 1 à 12.

14. Procédé de fabrication d'un chapeau de protection pour robinet de bouteille de fluide sous pression conforme à l'une quelconque des revendications précédentes, comprenant :
- une étape de réalisation d'un arceau (1) par emboutissage d'une feuille métallique, et
- une étape de soudage de l'extrémité inférieure de l'arceau (1) sur une base (2) de forme générale annulaire.

15. Procédé de fabrication selon la revendication 14, **caractérisé en ce que**, lors de l'étape de réalisation d'un arceau (1) par emboutissage d'une feuille métallique, une protubérance (10) est réalisée sur l'extrémité supérieure de l'arceau (1), le procédé comprenant en outre une étape de soudage d'un pommeau (4) sur ladite protubérance (10).

## Patentansprüche

1. Schutzkappe für ein Druckflüssigkeitszylinderventil, umfassend einen Überrollbügel (1), der ein geschütztes Schutzvolumen definiert, wobei das untere Ende des Überrollbügels (1) an einer allgemein ringförmigen Basis (2) zur Montage um den Hals eines Druckflüssigkeitszylinders befestigt ist, wobei der Überrollbügel (1) eine durch Prägen geformte Metallfolie umfasst, **dadurch gekennzeichnet, dass** das obere Ende des Überrollbügels (1) einen Vorsprung (10) aufweist, auf dem ein Knauf (4) zum Greifen der Kappe befestigt ist, und dass der Knauf (4) die allgemeine Form einer hohlen Kappe aufweist, die in der auf dem Überrollbügel (1) montierten Stellung darin mindestens einen Teil des Vorsprungs (10) aufnimmt.

2. Schutzkappe nach Anspruch 2, **dadurch gekennzeichnet, dass** der Knauf (4) durch Schweißen und/oder Crimpen auf dem oberen Ende des Überrollbügels (1) befestigt wird.

3. Schutzkappe nach einem der Ansprüche 1 oder 2, **dadurch gekennzeichnet, dass** der Vorsprung (10) durch Prägen des Überrollbügels (1) gebildet ist.

4. Schutzkappe nach einem der Ansprüche 1 bis 3, **dadurch gekennzeichnet, dass** der Knauf (4) auf das freie Ende (100) des Vorsprungs (10) durch Schweißen befestigt ist.

5. Schutzkappe nach einem der Ansprüche 1 bis 4, **dadurch gekennzeichnet, dass** der Knauf (4) hohl ist, wobei das freie Ende des Vorsprungs (10) an der Unterseite des Knaufs (4) anliegt, während ein unteres Ende (14) des Knaufs (4) auf dem oberen Ende des Überrollbügels (1) und/oder auf einem anderen Teil des Vorsprungs (10) aufliegt.

6. Schutzkappe nach einem der Ansprüche 1 bis 5, **dadurch gekennzeichnet, dass** das freie obere Ende des Knaufs (4) zur Außenseite der Schutzkappe hin konvex ist.

7. Schutzkappe nach einem der Ansprüche 1 bis 6, **dadurch gekennzeichnet, dass** die Basis (2) ein Metallteil umfasst, das sich von dem Überrollbügel (1) unterscheidet und die allgemeine Form eines offenen Rings hat, dessen zwei gegenüberliegende Enden mit entsprechenden Durchgängen (12, 22) für eine Klemmachse (3) des Rings versehen sind, wobei das untere Ende des Überrollbügels (1) an der Basis (2) durch Schweißen und/oder Crimpen befestigt ist.

8. Schutzkappe nach Anspruch 7, **dadurch gekennzeichnet, dass** das untere Ende des Überrollbügels (1) zwei Halbringe aufweist, die einen kreisförmigen Kragen (101) bilden, der die Basis (2) über einen Bruchteil des Umfangs der Basis (2) im Bereich von 20 bis 100 % und vorzugsweise im Bereich von 60 und 100 % umschließt.

9. Schutzkappe nach einem der Ansprüche 1 bis 8, **dadurch gekennzeichnet, dass** die Basis (2) aus einem durch Prägen gebildeten Metallteil besteht.

10. Schutzkappe nach einem der Ansprüche 1 oder 9, **dadurch gekennzeichnet, dass** der Überrollbügel (1) mindestens eine Rippe (11) aufweist, die sich in Biegerichtung des Überrollbügels (1) erstreckt, wobei die mindestens eine Rippe (11) durch eine Prägefalte gebildet ist.

11. Schutzkappe nach einem der Ansprüche 1 bis 10, **dadurch gekennzeichnet, dass** der Überrollbügel (1) zumindest teilweise zur Außenseite des Schutzvolumens hin konvex ist.

12. Schutzkappe nach einem der Ansprüche 1 bis 11, **dadurch gekennzeichnet, dass** der Vorsprung (10) die allgemeine Form eines Kegelstumpfes hat, dessen Durchmesser zu seinem freien Ende hin abnimmt.

13. Druckflüssigkeitszylinder versehen mit einem Ventil (18) und einer Ventilschutzkappe (18), **dadurch gekennzeichnet, dass** die Schutzkappe einem der Ansprüche 1 bis 12 entspricht.

14. Verfahren zur Herstellung einer Schutzkappe für ein Druckflüssigkeitszylinderventil gemäß einem der vorstehenden Ansprüche, umfassend:
- einen Schritt zur Herstellung eines Überrollbügels (1) durch Prägen einer Metallfolie, und
- einen Schritt des Schweißens des unteren Endes des Überrollbügels (1) auf einer allgemein ringförmigen Basis (2).

15. Verfahren zur Herstellung nach Anspruch 14, **dadurch gekennzeichnet, dass** während des Schrittes der Herstellung eines Überrollbügels (1) durch Prägen einer Metallfolie ein Vorsprung (10) am oberen Ende des Überrollbügels (1) hergestellt wird, wobei das Verfahren weiter einen Schritt des Schweißens eines Knaufs (4) auf den Vorsprung (10) umfasst.

## Claims

1. Protective cover for tap on bottle of fluid under pressure including a hoop (1) defining a volume housing a protection, the lower extremity of the hoop (1) being fixed to a base (2) generally of a circular form destined to be mounted around the neck of a bottle of fluid under pressure, the hoop (1) including a metallic sheet formed by pressing, **characterised in that** the upper extremity of the hoop (1) includes a protuberance (10) to which is fixed a knob (4) for gripping the cover and that this knob (4) has the general form of a hollow cap which, in position mounted on the hoop (1), accepts within it at least one part of the protuberance (10).

2. Cover according to claim 2, **characterised in that** the knob (4) is fixed by welding and/or pressing onto the upper extremity of the hoop (1).

3. Cover according to any of claims 1 or 2, **characterised in that** the protuberance (10) is formed by pressing the hoop (1).

4. Cover according to any of claims 1 to 3, **characterised in that** the knob (4) is fixed by welding to the free extremity (100) of the protuberance (10).

5. Cover according to any of claims 1 to 4, **characterised in that** the knob (4) is hollow, the free end of the protuberance (10) resting against the bottom of the knob (4), whereas the lower extremity (14) of the knob (4) rests on the upper extremity of the hoop (1) and/or on another portion of the protuberance (10).

6. Cover according to any of claims 1 to 5, **characterised in that** the upper free extremity of the knob (4) is curved towards the exterior of the cover.

7. Cover according to one of the claims 1 to 6, **characterised in that** the base (2) includes a metallic part distinct from the hoop (1) and having the general form of an open hoop of which two opposite extremities have passages, respectively (12, 22) for an axle (3) fixing the said hoop, the lower extremity of the hoop (1) being fixed to the base (2) by welding and/or pressing.

8. Cover according to claim 7, **characterised in that** the lower extremity of the hoop (1), includes two half-hoops forming a circular (101) collar which encircles the base (2) over a fraction of the circumference of the base (2) comprised between 20 and 100%, for preference between 60 and 100%.

9. Cover according to any of claims 1 to 8, **characterised in that** the base (2) comprises one metallic part shaped by pressing.

10. Cover according to any of claims 1 or 9, **characterised in that** the hoop (1) comprises at least one rib (11) which extends, depending on the direction of the bending of the hoop (1), with at least one rib (11) being formed by a fold in the pressing.

11. Cover according to any of claims 1 to 10, **characterised in that** the hoop (1) is at least partially convex towards the exterior of the protection volume.

12. Cover according to any of claims 1 to 11, **characterised in that** the protuberance (10) has the general form of a truncated cone the diameter of which reduces in the direction of its free extremity.

13. Bottle of fluid under pressure fitted with a tap (18) and a protective cover for the tap (18), **characterised in that** the cover is conform to any of claims 1 to 12.

14. Manufacturing process of a protective cover for a bottle of fluid under pressure conform to one of the precedent claims, including:
- A stage for creation of a hoop (1) by pressing a metallic sheet, and
- A stage for welding the lower extremity of the hoop (1) onto a base (2) of generally circular form.

15. Manufacturing process according to claim 14, **characterised in that**, during the stage for creation of a hoop (1) by pressing a metallic sheet, a protuberance (10) is created at the upper extremity of the hoop (1), the process includes, in addition, a stage for welding a knob (4) onto the said protuberance (10).
